# EUROPÄISCHE PATENTSCHRIFT

(11) **EP 2 613 985 B1**
(45) Veröffentlichungstag und Bekanntmachung des Hinweises auf die Patenterteilung: **24.08.2016**
(21) Anmeldenummer: 11749413.8
(22) Anmeldetag: 30.08.2011
(51) Int. Cl.: B60T 7/12

(54) **VERFAHREN ZUM ABSICHERN EINES FAHRZEUGS MIT AUTOMATISCHER PARKBREMSE**
METHOD FOR PROTECTING A VEHICLE WITH AN AUTOMATIC PARKING BRAKE
PROCÉDÉ POUR SÉCURISER UN VÉHICULE À L'AIDE D'UN FREIN DE STATIONNEMENT AUTOMATIQUE

(30) Priorität: 08.09.2010 DE 102010040382; 26.11.2010 DE 102010062013
(43) Veröffentlichungstag der Anmeldung: 17.07.2013
(73) Patentinhaber: Robert Bosch GmbH, 70442 Stuttgart (DE)
(72) Erfinder: BACHMANN, Michael, 71287 Weissach (DE); OLIVEIRA, Raphael, 71522 Backnang (DE)
(86) Internationale Anmeldenummer: PCT/EP2011/064883
(87) Internationale Veröffentlichungsnummer: WO 2012/031938

(56) Entgegenhaltungen:
- WO-A1-02/12040
- DE-A1-102007 001 708
- DE-A1-102007 030 780

## Beschreibung

### Stand der Technik

Die Erfindung betrifft ein Verfahren zum Halten eines Fahrzeugs im Stillstand gemäß dem Oberbegriff des Patentanspruchs 1.

Moderne Fahrzeuge sind häufig mit elektrisch betätigten Feststellbremsen ausgestattet, die auch als automatische Parkbremsen (APB) bezeichnen werden. Derartige Feststellbremsen umfassen in der Regel ein Bedienelement, wie z.B. einen Taster, mit dem die Feststellbremse verriegelt oder gelöst werden kann. Bei einer Betätigung des Tasters erkennt ein damit verbundenes Steuergerät den Feststellbremswunsch und steuert entsprechend einen Aktuator, wie z.B. einen Elektromotor an, um die Feststellbremse zu spannen oder zu lösen.

Darüber hinaus sind Fahrzeuge oft auch mit Bremsfunktionen ausgestattet, die das Fahrzeug automatisch in Stillstand halten, ohne dass der Fahrer hierzu das Bremspedal betätigen muss. Bekannte Bremsfunktionen sind z.B. AVH (Automatic Vehicle Hold) oder ACC Stop&Go (Adaptive Cruise Control). Bei der Funktion AVH wird der an den Radbremsen herrschende Bremsdruck eingesperrt und das Fahrzeug automatisch im Stillstand gehalten; bei der Funktion ACC Stop&Go wird - bei entsprechender Verkehrssituation - das Fahrzeug ohne Zutun des Fahrers bis in den Stillstand verzögert und automatisch gehalten.

Um den Bremsdruck an den Radbremsen automatisch zu halten, wird ein Ventil der Bremsanlage, in der Regel das so genannte Umschaltventil, geschlossen. Hierzu muss am Ventil ein bestimmter Ventilstrom angelegt werden. Die Umschaltventile können nicht beliebig lange bestromt werden, da sie andernfalls überhitzen. Bei herkömmlichen Ventilen liegt die maximale Belastbarkeit bei einem Haltedruck von 45 bar bei etwa zehn Minuten. Die Zuständigkeit für das Halten des Fahrzeugs wird daher, spätestens bevor die Ventile überhitzen, auf eine Feststellbremse übertragen, mit der das Fahrzeug energielos gehalten werden kann. Es erfolgt also ein Umschalten von der hydraulischen Bremse auf die Feststellbremse.

In der Umschalt- bzw. Übergangsphase werden die Verriegelungseinrichtungen der Feststellbremse von einem Steuergerät angesteuert, so dass sie verriegeln. Zeitlich überschneidend oder danach wird der an den Radbremsen herrschende hydraulische Bremsdruck abgebaut. Sobald der hydraulische Bremsdruck an den Rädern abgebaut ist, wird das Fahrzeug in der Regel nur noch von denjenigen Rädern gebremst, an denen sich die Feststellbremse befindet. Üblicherweise sind dies die Hinterräder. Bei größeren Steigungen und/oder rutschigem Untergrund ist es dadurch möglich, dass das Fahrzeug unvermittelt zu rutschen beginnt und sich dann mit blockierter Hinterachse hangabwärts bewegt. In diesem Fall müsste der Fahrer die kritische Situation erkennen und das Bremspedal drücken, um das Fahrzeug zu bremsen. Da die Übergabe auf die Feststellbremse aber erst einige Minuten nach dem Stillstand erfolgt, ist der Fahrer in der Regel nicht mehr aufmerksam und kann auf das Losrutschen des Fahrzeugs meist erst spät reagieren. In der Zeit, bis der Fahrer die Situation erkennt und das Bremspedal betätigt, kann sich das Fahrzeug bereits eine relativ große Strecke bergab bewegt haben. Das Umschalten auf die Festellbremse und das damit zusammenhängende unvermittelte Losrutschen des Fahrzeugs kann daher zu einer Gefährdung von Fahrer und Insassen oder anderen Verkehrsteilnehmern führen.

Aus der Druckschrift DE 10 2007 001 708 A1 ist ein Verfahren zum Halten eines Fahrzeugs im Stillstand bekannt, bei dem in einer ersten Phase das Fahrzeug von einer Betriebsbremse automatisch gehalten wird und im weiteren Verlauf eine automatisch ausgelöste Übergabe an eine Feststellbremse erfolgt, so dass das Fahrzeug nach Übergabe in einer zweiten Phase allein von der Feststellbremse gehalten wird, wobei in der zweiten Phase die Bewegung des Fahrzeugs sensorisch überwacht wird. Bei dem bekannten Verfahren wird somit bei jeder ungewollten Bewegung des Fahrzeugs an allen Rädern Bremsdruck mit der Betriebsbremse aufgebaut, was die Gefahr des Überhitzens eines Umschaltventils im Bremskreis an allen Rädern erhöht. Außerdem ist das bekannte Verfahren relativ unökonomisch und träge, da nach jedem Bremsen in der zweiten Phase die Feststellbremse deaktiviert und daraufhin wieder erneut aktiviert werden muss. Ähnliche Verfahren und Bremsanlagen sind zudem auch aus den Druckschriften DE 10 2007 030 780 A1 und WO 02/12040 A1 bekannt.

### Offenbarung der Erfindung

Es ist daher Aufgabe der vorliegenden Erfindung, die Fahrsicherheit in solchen Situationen zu verbessern, in denen eine Übergabe der Bremskräfte von der hydraulischen Bremse auf die Feststellbremse stattfindet und das Fahrzeug sich unvermittelt in Bewegung setzt.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird vorgeschlagen, in der Phase, in der das Fahrzeug allein durch die Feststellbremse gehalten wird, die Fahrzeugbewegung mittels einer geeigneten Sensorik zu überwachen und mittels der Betriebsbremsanlage automatisch Bremsdruck aufzubauen, sobald eine Bewegung des Fahrzeugs erkannt wurde. Durch die Überwachung der Fahrzeugbewegung kann ein Losrutschen des Fahrzeugs unmittelbar erkannt und entsprechend schnell darauf reagiert werden. Die Wegstrecke, die sich das Fahrzeug unkontrolliert bergab bewegt, kann daher im Vergleich zu einem unaufmerksamen Fahrer wesentlich verkürzt werden.

Gemäß einer bevorzugten Ausführungsform der Erfindung wird zur Bewegungsüberwachung wenigstens eine Rad-Drehzahl eines frei laufenden Rades gemessen und ausgewertet. Alternativ kann die Fahrzeugbewegung auch mittels einer anderen Sensorik, wie z. B. einer bekannten optischen Sensorik, eines oder mehrerer Radarsensoren, durch Auswertung von Positionsdaten, mittels eines Videosystems oder jeder anderen bekannten Sensorik überwacht werden. Als weitere Alternative kann auch ein Beschleunigungssensor verwendet werden, der z. B. die Längsbeschleunigung des Fahrzeugs misst. Wenn das Fahrzeug anrollt, entsteht üblicherweise ein kurzer Anroll-Ruck, der mittels des Beschleunigungssensors erkannt werden kann. Zusätzlich kann auch noch die Querbeschleunigung überwacht werden, um ein seitliches Rutschen des Fahrzeugs zu erkennen. Moderne Fahrzeuge umfassen üblicherweise eine so genannte Inertialsensorik mit wenigstens zwei Beschleunigungssensoren und einem Gierratensensor, die in diesem Fall genutzt werden kann.

Die Betriebsbremsanlage kann beispielsweise eine hydraulische oder pneumatische Bremsanlage sein.

Gemäß einer bevorzugten Ausführungsform der Erfindung wird, sobald ein Losrutschen des Fahrzeugs erkannt wurde, außerdem ein Warnsignal ausgegeben, das den Fahrer auf die kritische Situation hinweist. Das Warnsignal kann beispielsweise ein akustisches und/oder optisches Signal sein. Vorzugsweise wird zumindest ein Warnton ausgesendet.

Um den Bremsdruck an den Radbremsen zu erhöhen, wird vorzugsweise eine Hydraulikpumpe oder ein anderer Aktuator der Bremsanlage entsprechend angesteuert.

Die Übergabe von der Betriebsbremse auf die Feststellbremse kann z. B. zeitgesteuert erfolgen. Sie kann aber auch abhängig von der Bremsentemperatur oder der Anwesenheit des Fahrers im Fahrzeug sein. Wenn der Fahrer z. B. die Zündung ausschaltet und/oder das Fahrzeug verlässt, wird vorzugsweise auf die Feststellbremse umgeschaltet.

Die Erfindung wird nachstehend anhand der beigefügten Zeichnungen beispielhaft näher erläutert. Es zeigen:
Figur 1 eine schematische Blockdarstellung einer Feststellbremse;
Figur 2 ein schematisches Blockdiagramm eines Verfahrens zum Absichern eines Fahrzeugs, das mittels einer Feststellbremse im Stillstand gehalten wird, und
Figur 3 den Verlauf verschiedener Zustandsgrößen bei einem Fahrzeug mit automatischer Stillstandsabsicherung.

Wenn ein Fahrzeug automatisch im Stillstand gehalten wird, d. h. ohne dass der Fahrer hierzu das Bremspedal betätigt, können verschiedene Komponenten der Betriebsbremsanlage durch die dauerhafte Bestromung überhitzen. Betroffen sind hiervon insbesondere Ventile, wie z. B. das Umschaltventil oder auch die stromregelnden Endstufen im Steuergerät. Die Bremskräfte werden daher nach einer gewissen Zeit auf die Feststellbremse übertragen, mit der das Fahrzeug energielos und damit verlustfrei gehalten werden kann.

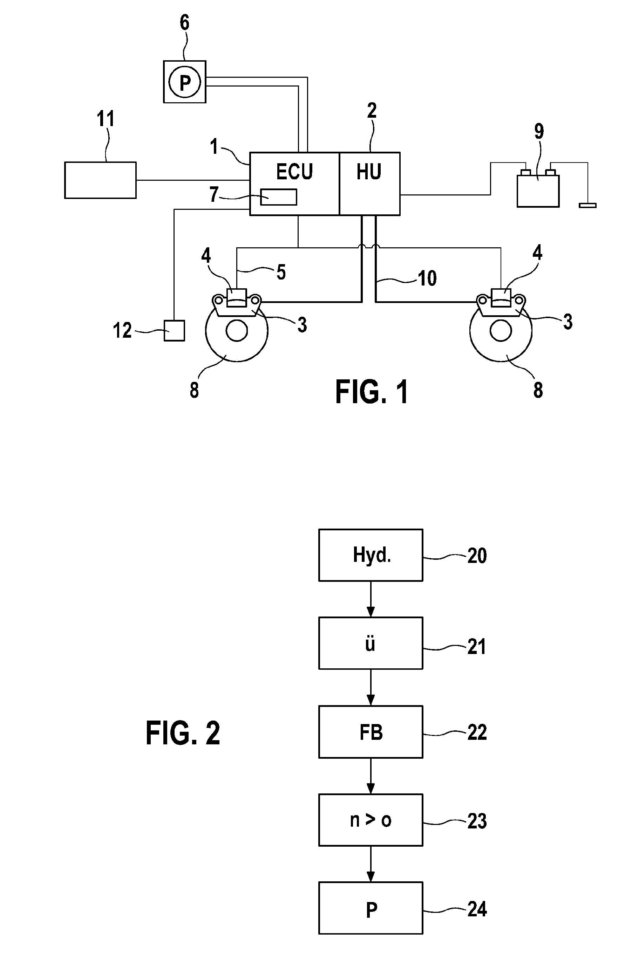

Figur 1 zeigt eine beispielshafte Ausführungsform einer elektrisch betätigten Feststellbremse, wie sie im wesentlich aus dem Stand der Technik bekannt ist. Die Feststellbremse umfasst ein Bedienelement 6 (Taster) zum Aktivieren/Deaktivieren der Feststellbremse, ein Steuergerät 1, ein Hydroaggregat 2 mit einer Hydraulikpumpe und zwei Radbremsen 3,8 mit zugehörigen Verriegelungseinrichtungen 4. Die Verriegelungseinrichtungen 4 der Feststellbremse sind dabei nur an den Rädern der Hinterachse vorgesehen. Die Radbremsen der Vorderräder können nicht verriegelt werden.

Nach einer Betätigung des Tasters 6 steuert das Steuergerät 1 die Pumpe und Ventile der Hydraulikeinheit 2 an, so dass sich in den Hydraulikleitungen 10 Druck aufbaut und die Bremsbeläge gegen die Bremsscheiben 8 gedrückt werden. Bei Erreichen des Verriegelungs-Bremsdrucks steuert das Steuergerät 1 die Elektromotoren der Verriegelungseinrichtungen 4 an und verriegelt dadurch die Radbremsen 3, 8. Danach wird der Bremsdruck wieder abgebaut. Dabei werden die Bremskolben durch die Verriegelungseinrichtung 4 daran gehindert, zurück in die Ausgangsposition zu gelangen, so dass die Feststellbremse weiterhin festgezogen bleibt.

Nach der Kraftübergabe auf die Feststellbremse und dem Abbau des hydraulischen Bremsdrucks an den Rädern der Vorderachse kann es passieren, dass sich das Fahrzeug unerwartet in Bewegung setzt, da es nur noch von zwei Rädern gebremst wird. Um diese Situation möglichst schnell zu erkennen, wird die Fahrzeugbewegung mittels einer geeigneten Sensorik 12, z. B. mittels wenigstens eines Rad-Drehzahlsensors überwacht. Wenn das wenigstens eine Drehzahlsignal einen Wert ungleich Null liefert, wird die Hydraulikpumpe 2 automatisch vom Steuergerät 1 angesteuert und somit Bremsdruck aufgebaut. Dadurch kann das Fahrzeug sehr schnell wieder gestoppt werden.

Figur 2 zeigt die wesentlichen Zustände des vorstehend beschriebenen Verfahrens. Dabei bezeichnet das Kästchen 20 einen Zustand, in dem das Fahrzeug rein von der hydraulischen Betriebsbremse gehalten wird, wobei der Bremsdruck an den Radbremsen eingesperrt ist. In Block 21 findet eine Übergabe von der hydraulischen Betriebsbremse auf die Feststellbremse 1, 4, 6 statt. Dabei werden zunächst die Verriegelungseinrichtungen 4 der Feststellbremse 1, 4, 6 verriegelt und danach der hydraulische Bremsdruck an den Radbremsen 3, 8 abgebaut. In Zustand 22 wird das Fahrzeug schließlich allein durch die Feststellbremse an den Hinterrädern gehalten. In Block 23 wird ein Losrollen des Fahrzeugs erkannt und in Block 24 der Bremsdruck automatisch aufgebaut, um das Fahrzeug wieder zum Stillstand zu bringen.

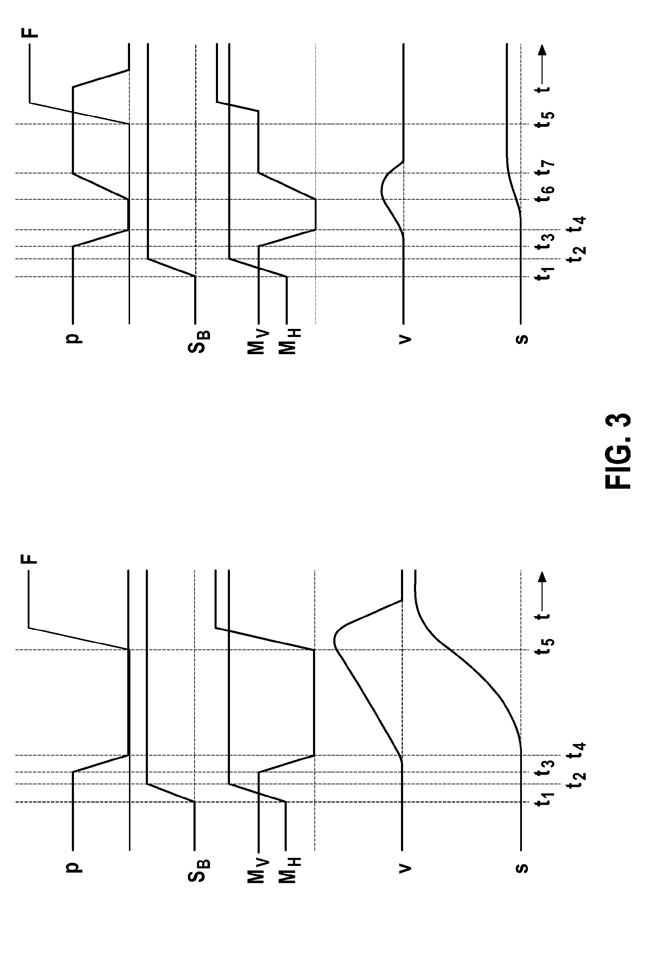

Figur 3 zeigt den Verlauf verschiedener Zustandsgrößen bei einem Fahrzeug mit automatischer Stillstandsabsicherung (rechte Seite) und ohne automatische Stillstandsabsicherung (linke Seite).

Der Bremsdruck p ist zu Beginn der Aufzeichnung größer als null bar, die Feststellbremse befindet sich in der entriegelten Position (s_{B} = 0), das Bremsmoment an der Vorderachse M_{V} und an der Hinterachse M_{H} sind größer als null. Die Fahrzeuggeschwindigkeit v ist gleich null, d.h. das Fahrzeug befindet sich im Stillstand, und der vom Fahrzeug zurückgelegte Weg s ist ebenfalls gleich null.

Zum Zeitpunkt t₁ beginnt die Feststellbremse zuzufahren; das Bremsmoment M_{H} an der Hinterachse nimmt dementsprechend zu. Im Zeitpunkt t₂ hat die Feststellbremse die verriegelte Position erreicht. Im Zeitpunkt t₃ wird der hydraulische Bremsdruck p abgebaut, so dass das Fahrzeug nur noch von der Feststellbremse gehalten wird. Im Zeitpunkt t₄ beginnt das Fahrzeug zu rutschen. Bei dem links dargestellten System ohne zusätzliche Stillstandsabsicherung dauert es bis zum Zeitpunkt t₅, bis der Fahrer dies merkt und das Fuß-Bremspedal betätigt (Signal F). Dadurch kann das Fahrzeug bereits einen relativ großen Weg s zurücklegen.

Bei dem rechts dargestellten, erfindungsgemäßen System mit Stillstandsabsicherung wird das Rutschen des Fahrzeugs dagegen bereits im Zeitpunkt t₆ erkannt und unmittelbar danach automatisch Bremsdruck aufgebaut. Das Bremsmoment M_{V} an der Vorderachse nimmt dementsprechend zu. Dadurch kann das Fahrzeug bereits nach einem sehr kurzen Weg s wieder gestoppt werden, wodurch sich die Fahrsicherheit für Fahrer und Insassen deutlich verbessert.

## Patentansprüche

1. Verfahren zum Halten eines Fahrzeugs im Stillstand, bei dem in einer ersten Phase das Fahrzeug von der Betriebsbremse automatisch gehalten wird und im weiteren Verlauf eine automatisch ausgelöste Übergabe an eine Feststellbremse (1, 4, 6) erfolgt, so dass das Fahrzeug nach der Übergabe, in einer zweiten Phase, allein an der Hinterachse von der Feststellbremse (1, 4, 6) gehalten wird, wobei in der zweiten Phase die Bewegung des Fahrzeugs sensorisch überwacht wird, **dadurch gekennzeichnet, dass** in der zweiten Phase die Betriebsbremse an der Vorderachse automatisch aktiviert wird, sobald erkannt wurde, dass sich das Fahrzeug ungewollt in Bewegung gesetzt hat.

2. Verfahren nach Anspruch 1, **dadurch gekennzeichnet, dass** wenigstens eine Rad-Drehzahl überwacht wird, um eine Bewegung des Fahrzeugs zu erkennen.

3. Verfahren nach Anspruch 1 oder 2, **dadurch gekennzeichnet, dass** ein Warnsignal ausgegeben wird, wenn ein Losrollen bzw. -rutschen des Fahrzeugs aus dem Stillstand mit angezogener Feststellbremse erkannt wurde.

4. Verfahren nacht Anspruch 3, **dadurch gekennzeichnet, dass** das Warnsignal ein akustisches und/oder optisches Signal ist.

5. Verfahren nach einem der vorherigen Ansprüche, **dadurch gekennzeichnet, dass** der Bremsdruck mittels einer Pumpe automatisch erhöht wird, wenn ein Losrollen des Fahrzeugs erkannt wurde.

6. Verfahren nach einem der vorherigen Ansprüche, **dadurch gekennzeichnet, dass** die Übergabe von der Betriebsbremse auf die Feststellbremse (1, 4, 6) abhängig von der Zeit, der Bremsentemperatur oder der Anwesenheit des Fahrers im Fahrzeug erfolgt.

7. Steuergerät, umfassend Mittel, die ein der vorstehen beanspruchten Verfahren durchführen.

## Claims

1. Method for securing a vehicle in a stationary state, in which in a first phase the vehicle is automatically secured by the service brake and in the further course an automatically triggered transfer to a parking brake (1, 4, 6) occurs, with the result that after the transfer, in a second phase, the vehicle is secured solely by the parking brake (1, 4, 6) at the rear axle, wherein in the second phase movement of the vehicle is monitored by a sensor, **characterized in that** in the second phase the service brake is automatically activated at the front axle as soon as it has been detected that the vehicle has undesirably begun to move.

2. Method according to Claim 1, **characterized in that** at least one wheel rotational speed is monitored in order to detect the movement of the vehicle.

3. Method according to Claim 1 or 2, **characterized in that** a warning signal is output if it has been detected that the vehicle is rolling or sliding away out of the stationary state with the parking brake applied.

4. Method according to Claim 3, **characterized in that** the warning signal is an acoustic and/or optical signal.

5. Method according to one of the preceding claims, **characterized in that** the brake pressure is increased automatically be means of a pump if it is detected that the vehicle is rolling away.

6. Method according to one of the preceding claims, **characterized in that** the transfer from the service brake to the parking brake (1, 4, 6) takes place as a function of time, of the temperature of the brakes or of the presence of the driver in the vehicle.

7. Control unit comprises means which carry out one of the methods claimed above.

## Revendications

1. Procédé pour maintenir un véhicule à l'arrêt, dans lequel, dans une première phase, le véhicule est maintenu automatiquement par le frein de service et dans la suite il se produit un transfert déclenché automatiquement à un frein de stationnement (1, 4, 6), de telle manière que le véhicule soit dans une deuxième phase, après le transfert, maintenu uniquement sur l'essieu arrière par le frein de stationnement (1, 4, 6), dans lequel dans la deuxième phase le mouvement du véhicule est surveillé par des capteurs, **caractérisé en ce que**, dans la deuxième phase, le frein de service sur l'essieu avant est activé automatiquement, dès qu'il a été reconnu que le véhicule s'est mis en mouvement de manière non désirée.

2. Procédé selon la revendication 1, **caractérisé en ce que** l'on surveille la vitesse de rotation d'au moins une roue, afin de reconnaître un mouvement du véhicule.

3. Procédé selon la revendication 1 ou 2, **caractérisé en ce que** l'on émet un signal d'avertissement, lorsqu'un mouvement de roulage ou de glissement du véhicule hors de la position d'arrêt avec le frein de stationnement serré a été reconnu.

4. Procédé selon la revendication 3, **caractérisé en ce que** le signal d'avertissement est un signal acoustique et/ou un signal optique.

5. Procédé selon l'une quelconque des revendications précédentes, **caractérisé en ce que** la pression du frein est automatiquement accrue par une pompe, lorsqu'un mouvement de roulage du véhicule a été reconnu.

6. Procédé selon l'une quelconque des revendications précédentes, **caractérisé en ce que** le transfert du frein de service au frein de stationnement (1, 4, 6) est effectué en fonction du temps, de la température des freins ou de la présence du conducteur.

7. Appareil de commande, comprenant des moyens qui exécutent un des procédés revendiqués ci-dessus.
